# EUROPÄISCHE PATENTANMELDUNG

(11) **EP 0 899 902 A2**
(43) Veröffentlichungstag der Anmeldung: **03.03.1999**
(21) Anmeldenummer: 98113219.4
(22) Anmeldetag: 15.07.1998
(51) Int. Cl.: H04J 3/06, H04J 7/00

(54) **Verfahren zum Übermitteln von Einmessinformationen an eine zentrale Einrichtung von angeschlossenen Komponenten in einem Punkt zu Multipunkt-Kommunikationssystem**

(30) Priorität: 26.08.1997 DE 19737135
(71) Anmelder: SIEMENS AKTIENGESELLSCHAFT, 80333 München (DE)
(72) Erfinder: Bolze, Thomas Dr., 80804 München (DE)

(57) **Zusammenfassung**

Eine Einmeßinformation (einf) wird mit einem gegenüber dem für die Übermittlung von Nutzinformationen (ni) vorgesehenen Sendepegel (sp) geringeren Sendepegel (sp') und mit einer gegenüber für die Übermittlung von Nutzinformationen (ni) vorgesehenen Übertragungsgeschwindigkeit (c) geringeren Übertragungsgeschwindigkeit (c/x) von Komponenten (KE) an eine zentrale Einrichtung (BS) übermittelt. Hierdurch wird der schaltungs- und programmtechnische Aufwand erheblich verringert, wobei die Einmeßinformation (einf) ungestört und gleichzeitig zu Nutzinformationen (ni) von weiteren Komponenten (KE) übertragen wird.

## Beschreibung

In einem Punkt zu Multipunkt-Kommunikationssystem - beispielsweise in drahtlosen Funksystemen oder Lichtwellenleiter-Kommunikationsnetzen - kommunizieren die Kommunikationsendgeräte - beispielsweise drahtlos durch DECT- oder CDMA-Kommunikationsendgeräte - mit zentralen Einrichtungen - bei drahtlosem Anschluß beispielsweise Radio Basestations. Die Übertragungsstrecke ist bei drahtlosem Anschluß meist gemäß den standardisierten DECT- oder CDMA-Übertragungs- und Zugriffsverfahren realisiert. Beim DECT-Standard sind als Zugriffsverfahren das TDMA(Time Division Multiple Access)- und das FDMA(Frequency Division Multiple Access)-Verfahren vorgesehen, wobei einem drahtlos angeschlossenen Kommunikationsendgerät jeweils zumindest ein Zeitschlitz innerhalb eines von mehreren Frequenzbereichen zugeordnet ist. Bei CDMA(Code Division Multiple Access)-Zugriffsverfahren wird im Rahmen eines Verbindungsaufbaus jedem drahtlos angeschlossenen Kommunikationsendgerät innerhalb eines von ggfs. mehreren Frequenzbereichen zumindest ein orthogonaler Übertragungscode zugeteilt. Die TDMA, FDMA und CDMA-Übertragungs- bzw. Zugriffsverfahren kommen angepaßt ebenso in Lichtwellenleiter- oder in drahtgebundenen Punkt zu Multipunkt-Kommunikationsnetzen zum Einsatz.

Um bei CDMA- und TDMA-Verfahren die Synchronität der übermittelten Signale - beim TDMA-Verfahren die Synchronität der in der zentralen Einrichtung empfangenen Zeitschlitze untereinander und beim CDMA-Verfahren die Synchronität der an der zentralen Einrichtung empfangenen Signale - zu gewährleisten, werden Einmeß-Verfahren bzw. -Methoden verwendet, mit deren Hilfe eine Einmeßinformation von den Komponenten an die zentrale Komponente übermittelt sowie in dieser Korrekturinformation ermittelt und an die dezentralen Komponenten übermittelt werden. Hierzu werden beispielsweise beim TDMA-Verfahren in periodischen Zeitabständen bestimmte Zeitschlitze freigehalten, über die von den Kommunikationsendgeräten Einmeßdaten - beispielsweise drahtlos - an die zentrale Einrichtung übermittelt werden. In der zentralen Einrichtung werden die Laufzeiten der Übertragungsstrecke - beispielsweise der Luftschnittstelle - ermittelt und eine entsprechende Korrekturinformation an das betroffene Kommunikationsendgerät übermittelt. Die zu übermittelnden Nutzinformationen werden mit Hilfe der Korrekturinformation derart in dem jeweiligen Zeitschlitz ausgesandt, daß sie zeitschlitzgerecht an der zentralen Einrichtung eintreffen.

Desweiteren ist bekannt, die Einmeßinformationen über Datenkanäle zu übermitteln, die bezüglich der Frequenz von den Datenkanälen zur Übermittlung der Nutzinformationen getrennt sind. Hierbei ist für die Übermittlung von Einmeßinformationen ein Pilotkanal vorgesehen, der in einem separaten Frequenzbereich realisiert ist. Bei beiden vorhergehend erläuterten Einmeßverfahren ist eine zusätzliche Übertragungskapazität der Übertragungsstrecke erforderlich, die nur durch einen erheblichen zusätzlichen schaltungs- und programmtechnischen Aufwand bereitgestellt werden kann.

Die der Erfindung zugrundeliegende Aufgabe besteht darin, die Einmessung von an eine zentrale Einrichtung angeschlossenen - insbesondere drahtlos - Komponenten zu verbessern. Die Aufgabe wird durch die Merkmale des Patentanspruchs 1 gelöst.

Der wesentliche Aspekt des erfindungsgemäßen Verfahrens ist darin zu sehen, daß die Einmessung von angeschlossenen Kommunikationsendgeräten während des Betriebes der Übertragungsstrecke ohne Beeinträchtigung der genutzten Übertragungskanäle durchgeführt werden kann. Dies wird dadurch erreicht, daß die Einmeßinformationen mit einem gegenüber dem für die Übermittlung von Nutzinformationen vorgesehenen Sendepegel geringeren Sendepegel und mit einer gegenüber für die Übermittlung von Nutzinformationen vorgesehenen Übertragungsgeschwindigkeit geringeren Übertragungsgeschwindigkeit von den Komponenten an die zentrale Einrichtung übermittelt werden. Desweiteren ist aufgrund der erheblich niedrigeren Datenübertragungsgeschwindigkeit der Aufwand für eine Realisierung des erfindungsgemäßen Verfahrens gegenüber den bekannten Verfahren erheblich reduziert. Ein weiterer Vorteil des erfindungsgemäßen Verfahrens besteht darin, daß es für unterschiedliche Übertragungsstrecken - z.B. CDMA- oder TDMA- Luftschnittstelle - bzw. Übertragungsmedien verwendet werden kann.

Gemäß einer vorteilhaften Ausgestaltung des erfindungsgemäßen Verfahrens wird der Sendepegel derart klein gewählt, daß der Nutz-Rauschsignal-Abstand unbeeinträchtigt bleibt - Anspruch 2. Dies bedeutet, daß der Pegel der ausgesandten Einmeßinformationen so klein gewählt wird, daß dieser im Rauschpegel des Pegels der für die Übermittlung der Nutzinformationen vorgesehenen Übertragungssignale, d.h. unter dem Nutz-Rauschsignal-Abstand des für die Übermittlung der Nutzinformationen vorgesehenen Übertragungssignals liegt.

Nach einer weiteren Ausgestaltung des erfindungsgemäßen Verfahrens werden die zu übermittelnden Nutzinformationen (ni) verscrambelt - Anspruch 3. Durch die Verscrambelung der Nutzinformationen werden die Störungen bewirkende Dauerlagen - insbesondere binäre Eins- oder Null-Dauerlagen - vermieden und somit die zu übermittelnden Einmeßinformationen geringer gestört.

In drahtlosen Kommunikationssystemen bzw. Funk-Kommunikationsnetzen sind die Komponenten des Punkt zu Multipunkt-Kommunikationssystems mit Hilfe von Funkeinrichtungen drahtlos an die zentrale Einrichtung angeschlossen - Anspruch 4, wobei die Übertragungs- bzw. Zugriffsverfahren für den Anschluß vorteilhaft gemaß dem DECT- oder CDMA-Übertragungsverfahren ausgestaltet sind - Anspruch 5.

Das erfindungsgemäßen Verfahren ist ebenfalls für optische drahtgebundene Kommunikationsnetze vorgesehen, wobei die Komponenten mit Hilfe von optischen bzw. drahtgebundenen Übertragungseinrichtungen optisch bzw. drahtgebunden an die zentrale Einrichtung angeschlossen sind - Anspruch 6 und 7. Hierbei sind die reduzierten Pegel und Übertragungsgeschwindigkeiten bei optischer Realisierung auf den optischen Pegel und die optische Übertragungsgeschwindigkeit bezogen.

Im folgenden wird das erfindungsgemäße Verfahren anhand eines Blockschaltbildes näher erläutert.

Das Blockschaltbild zeigt ein Punkt zu Multipunkt-Kommunikationsnetz, das beispielsweise durch ein Funk-Kommunikationsnetz FKN realisiert ist. Die zentrale Einrichtung des Funk-Kommunikationsnetzes FKN stellt für jeweils eine Funkzelle eine Basisstation BS dar, an die Kommunikationsendgeräte KE.. drahtlos angeschlossen sind. Im beispielhaft dargestellten einen Kommunikationsendgerät KE sowie in der Basisstation BS sind die für die Erläuterung des erfindungsgemäßen Verfahrens erforderlichen Komponenten angegeben.

Im Kommunikationsendgerät KE ist ein Taktgenerator TG zur Bildung von Taktsignalen ts mit der Übertragungsgeschwindigkeit c und von weiteren Taktsignalen ts' mit einer Übertragungsgeschwindigkeit von c/x angeordnet. Mit den Taktsignalen ts (c) werden im Kommunikationsendgerät KE gebildete und in einem Zwischenspeicher ZSP gespeicherte Nutzinformationen ni ausgelesen und über einen Umschalter S an eine Funk-/Sendeeinheit FSE im Sinne eines drahtlosen Übermittelns an die Basisstation BS übertragen. Der Sendepegel sp der Nutzinformationen ni entspricht hierbei dem Pegel der aus dem Zwischenspeicher ZSP ausgelesenen Nutzinformationen ni.

In einem Speicher SP sind die Einmeßinformationen einf gespeichert. Diese Einmeßinformationen einf werden mit Hilfe des weiteren Taktsignals ts' ausgelesen und über ein Dämpfungsglied DG und den Umschalter S ebenfalls an die Funk-/Sendeeinheit FSE gesteuert. Erfindungsgemäß ist die Übertragungsgeschwindigkeit c/x der weiteren Taktsignale ts' erheblich geringer, wobei im Ausführungsbeispiel die Übertragungsgeschwindigkeit c/x, beispielsweise x = 100 gewählt ist. Dies ergibt eine 100-fach geringere Übertragungsgeschwindigkeit c/x gegenüber der Übertragungsgeschwindigkeit c der Nutzinformation ni. Mit Hilfe des Dämpfungsgliedes DG wird der Pegel der aus dem Speicher SP ausgelesenen Einmeßinformation einf beispielsweise um den Faktor 10 bzw. 20 dB erniedrigt. Mit Hilfe des Umschalters S wird die Einmeßinformation einf während der Einmeßphase, d. h. beispielsweise bei einem Verbindungsaufbau an die Funk-/Sendeeinheit FSE geschaltet.

Das Dämpfungsglied DG kann ebenso in der Funk-/Sendeeinheit zur Reduzierung des Sendepegels von abgegebenen Funksignalen fs angeordnet sein - nicht dargestellt. Diese Realisierung ist insbesondere bei einer überwiegend digitalen Ausgestaltung der vorhergehend erläuterten Komponenten vorgesehen.

In der Basisstation BS werden die empfangenen Funksignale fs mit Hilfe von nicht dargestellten Komponenten drahtlos empfangen und die darin enthaltenen Nutz- bzw. Einmeßinformationen ni, einf durch einen Verstärker V verstärkt. Die Trennung der beiden Informationen ni, einf wird mit Hilfe eines Einmeßfilters FE und eines Datenfilters FD bewirkt, wobei die Filter auf die Übertragungsgeschwindigkeiten c, c/x der Nutzinformation ni bzw. der Einmeßinformation einf abgestimmt sind. Die gefilterte Nutzinformation ni sowie die aufgrund der großen Bandbreite des Datenfilters FD gering gefilterte Einmeßinformation einf mit niedrigem Pegel sp' wird in einem Diskriminator DIS hinsichtlich ihres Pegels zum Erkennen von Nutzinformation ni bewertet. Die so detektierte Nutzinformation ni wird an die weiteren Komponenten - nicht dargestellt - der Basisstation BS weitergeleitet. Die niederfrequenten Anteile der Nutzinformationssignale n gelangen über ein weiteres Einmeßfilter FE' an einen Eingang E' eines Subtrahierers SUB, an dessen weiteren Eingang E der Ausgang des Einmeßfilters FE angeschlossen ist. Der Ausgang A des Subtrahierers SUB ist über einen weiteren Diskriminator DIS' auf weitere, die Bewertung der Einmeßinformation einf durchführende Komponenten - nicht dargestellt - der Basisstation BS geführt. Durch den Subtrahierer SUB wird der störende Einfluß des niederfrequenten Anteils des Nachrichteninformationssignals durch dessen Subtraktion vom Einmeßsignal eliminiert, d.h. es wird der Störeinfluß gleichzeitig übermittelter Nutzinformation ni im laufenden Betrieb im Empfangsweg auf die Einmeßinformationen einf vermindert. Anschließend wird dem weiteren Diskriminator DIS' die Einmeßinformation einf zur Bewertung hinsichtlich der Höhe des Einmeßinformations-Pegels zugeführt. Hierbei wird durch Vergleich mit Pegelschwellwerten das Vorliegen von Einmeßinformation einf detektiert. Die ermittelte Einmeßinformation einf wird insbesondere für eine Ermittlung von Korrekturinformationen an die nicht dargestellten Komponenten der Basisstation BS weitergeleitet. Bei einer Realisierung nach dem standardisierten DECT-Übertragungs- und Zugriffsverfahren wird beispielsweise durch die ermittelte Korrekturinformation der Sendezeitpunkt eines Zeitschlitzes innerhalb eines durch das betroffene Kommunikationsendgerät genutzten Übertragungskanals mitgeteilt.

Erfindungsgemäß wird aufgrund der geringen Übertragungsfrequenz der Einmeßinformation einf im Empfangszweig in der Basisstation BS das Rauschen bzw. werden die Rauschsignale stärker unterdrückt, so daß die Eimmeßinformationen einf bzw. Einmeßdaten sicherer ausgewertet werden können.

Das erfindungsgemäße Verfahren ist in allen drahtgebundenen, optischen und Funk-Kommunikationssystemen einsetzbar, wobei die Pegelabschwächung bei digitaler Verarbeitung der Nutz- und Einmeßinformation ni, einf in den Sende- bzw. Übertragungseinrichtungen und bei analoger Verarbeitung der Nutz- und Einmeßinformation ni, einf an diesen selbst durchgeführt wird.

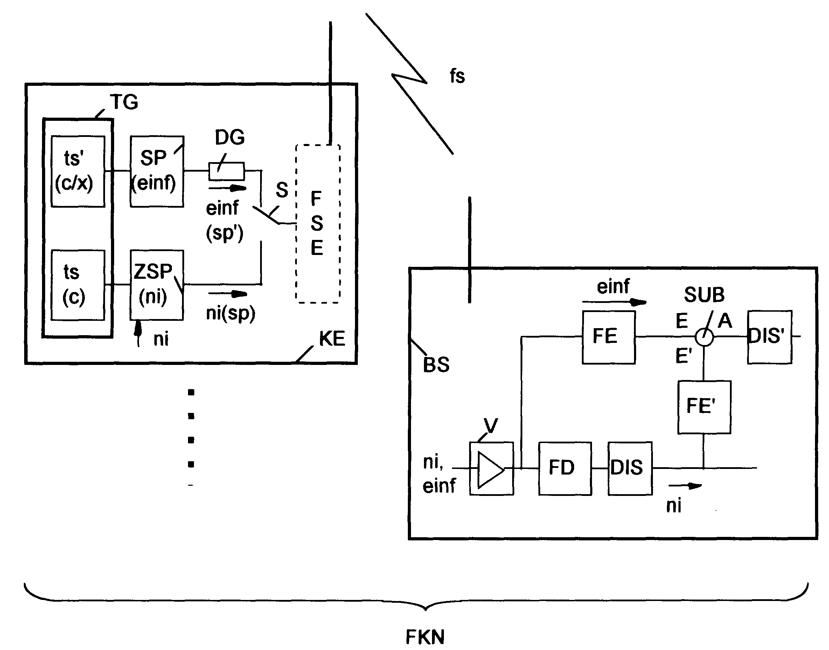

## Patentansprüche

1. Verfahren zum Übermitteln von Einmeßinformationen (einf) an eine zentrale Einrichtung (BS) von angeschlossenen Komponenten (KE) in einem Punkt zu Multipunkt-Kommunikationssystem (FKN),
- bei dem die Einmeßinformationen (einf) mit einem gegenüber dem für die Übermittlung von Nutzinformationen (ni) vorgesehenen Sendepegel (sp) geringerem Sendepegel (sp') und
- mit einer gegenüber für die Übermittlung von Nutzinformationen (ni) vorgesehenen Übertragungsgeschwindigkeit (c) geringeren Übertragungsgeschwindigkeit (c/x)
von den Komponenten (KE) an die zentrale Einrichtung (BS) übermittelt werden.

2. Verfahren nach Anspruch 1,
**dadurch gekennzeichnet,**
daß der Sendepegel (sp') derart klein gewählt wird, daß der Nutz-Rauschsignal-Abstand der für die Übermittlung von Nutzinformationen (ni) vorgesehenen Übertragungssignale (ni(sp)) unbeeinträchtigt bleibt.

3. Verfahren nach Anspruch 1 oder 2,
**dadurch gekennzeichnet,**
daß die zu übermittelnden Nutzinformationen (ni) verscrambelt werden.

4. Verfahren nach einem der Ansprüche 1 bis 3,
**dadurch gekennzeichnet,**
daß die Komponenten (KE) des Punkt zu Multipunkt-Kommunikationssystems mit Hilfe von Funkeinrichtungen (FE) drahtlos an die zentrale Einrichtung (BS) angeschlossen ist.

5. Verfahren nach Anspruch 4,
**dadurch gekennzeichnet,**
daß der drahtlose Anschluß gemäß dem DECT- oder CDMA-Übertragungsverfahren erfolgt.

6. Verfahren nach einem der Ansprüche 1 bis 3,
**dadurch gekennzeichnet,**
daß die Komponenten (KE) mit Hilfe von optischen Übertragungseinrichtungen optisch an die zentrale Einrichtung angeschlossen sind.

7. Verfahren nach einem der Ansprüche 1 bis 3,
**dadurch gekennzeichnet,**
daß die Komponenten (KE) mit Hilfe von drahtgebundenen Übertragungseinrichtungen über Leitungen an die zentrale Einrichtung angeschlossen sind.
